# EUROPEAN PATENT SPECIFICATION

(11) **EP 4 041 486 B1**
(45) Date of publication and mention of the grant of the patent: **26.03.2025**
(21) Application number: 20872796.6
(22) Date of filing: 29.09.2020
(51) Int. Cl.: B23K 11/30, B23K 11/00, B23K 11/31

(54) **SPOT WELDING ASSEMBLY WITH PIVOTABLE ELECTRODES**
PUNKTSCHWEISSVERBINDUNG MIT SCHWENKBAREN ELEKTRODEN
ENSEMBLE DE SOUDAGE PAR POINTS AVEC ÉLECTRODES PIVOTANTES

(30) Priority: 04.10.2019 US 201962910605 P
(43) Date of publication of application: 17.08.2022
(73) Proprietor: Magna International Inc., Aurora, ON L4G 7K1 (CA)
(72) Inventor: CLARK, Austin, Bowling Green, OH 43402 (US)
(74) Representative: Grünecker Patent- und Rechtsanwälte PartG mbB
(86) International application number: PCT/US2020/053228
(87) International publication number: WO 2021/067244

(56) References cited:
- JP-A- 2008 213 032
- US-A- 1 996 901
- US-A- 2 346 088
- US-A- 2 346 088
- US-A- 2 523 367
- US-A- 3 487 191
- US-A1- 2006 043 074
- US-B2- 7 564 005

## Description

### CROSS-REFERENCE TO RELATED APPLICATIONS

### TECHNICAL FIELD

The subject disclosure generally relates to welding assemblies. More particularly, the subject disclosure relates to a spot welding assembly with at least one pivotable electrode for accommodating variances in work pieces, see claims 1, 4, 8 and 11-12.

### BACKGROUND OF THE DISCLOSURE

Spot welding assemblies are known in the art for welding first and second work pieces to one another. Spot welding assemblies typically include a base for supporting a base electrode and a welding gun for supporting a gun electrode. During a welding operation, the welding gun is moved toward the base in order to draw the first and second work pieces against one another. A current is then applied through the base and gun electrodes and the first and second work pieces in order to melt regions of at least one of the first work piece and/or the second work piece to form a weld therebetween. Further prior art are disclosed in JP 2008 213032 A (describing the preamble of claims 1, 4, 8, 11, and 12 respectively), US 2 346 088 A and US 2 523 367 A.

An issue with such spot welding assemblies, especially when the welding process is automated, is that the electrodes are static, and thus do not compensate for variations in work piece placement and/or dimensional variations among the work pieces, especially when the work pieces are not arranged parallel to a welding surface defined between the first and second electrodes. As such, the first and/or second work piece may not make adequately contact the electrodes, thus leading to an insufficient weld. In these situations, it is known to manually adjust an orientation of the welding gun and/or base to provide improved contact against the work pieces, however, such manual adjustments can be time consuming and labor intensive.

According to the present invention, there are defined spot welding assemblies having the features of any of claims 1, 4, 8, 11 and 12. Further preferred embodiments of the present invention are defined in the dependent claims. In view of the foregoing, there remains a need for improvements to such spot welding assemblies.

### SUMMARY OF THE INVENTION

According to a first aspect of the present invention, a spot welding assembly for welding a first work piece to a second work piece is defined in claim 1.

Because both of the base and the gun electrodes are pivotable, the electrodes are able to quickly be oriented flat against the work pieces even when the work pieces are not parallel to an original plane of the base and gun electrodes, such as when the work pieces are improperly located or irregularly dimensioned. Orienting the electrodes in this manner ensure sufficient electrical and thermal conductivity during welding in order to provide a sufficient weld. Such adjustments may be provided in both automated and manual welding operations.

The subject spot welding assembly may be employed in projection welding applications, wherein at least one of the work pieces has at least one projection that engages the other work piece for focusing a current from the base and gun electrodes.

### BRIEF DESCRIPTION OF THE DRAWINGS

Other advantages of the present invention will be readily appreciated, as the same becomes better understood by reference to the following detailed description when considered in connection with the accompanying drawings wherein:
FIG. 1 is a perspective view of an example spot welding assembly;
FIGS. 2A-2B are front perspective views of work pieces located between base and gun electrodes of the example spot welding assembly, illustrating the base and gun electrodes being pivoted in different directions;
FIGS. 3A-3D are front partial views of base and gun electrodes of the example spot welding assembly, illustrating the base and gun electrodes being pivoted in different directions;
FIGS. 4A-4C are top, front and side views of a weld pin of the example spot welding assembly;
FIGS. 5A-5C are top, front and side views of an upper collar of the example spot welding assembly;
FIGS. 6A-6C are top, front and side views of a gun electrode of the example spot welding assembly;
FIGS. 7A-7C are top, front and side views of an upper adapter of the example spot welding assembly;
FIGS. 8A-8C are top, front and side views of a base electrodes of the example spot welding assembly;
FIGS. 9A-9C are top, front and side views of a base of the example spot welding assembly;
FIGS. 10A-10C are top, front and side views of a retaining collar of the example spot welding assembly;

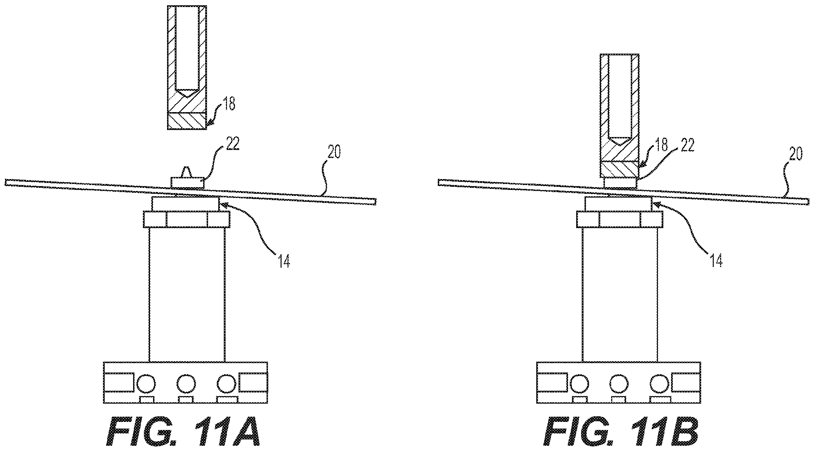

FIGS. 11A-11B are front partial views of the base and gun electrodes of the example spot welding assembly, illustrating first and second work pieces being located between the base and gun electrodes in an automatic operation;
FIGS. 12A-12B are front partial views of the base and gun electrodes of the example spot welding assembly, illustrating first and second work pieces being located between the base and gun electrodes in a manual operation;

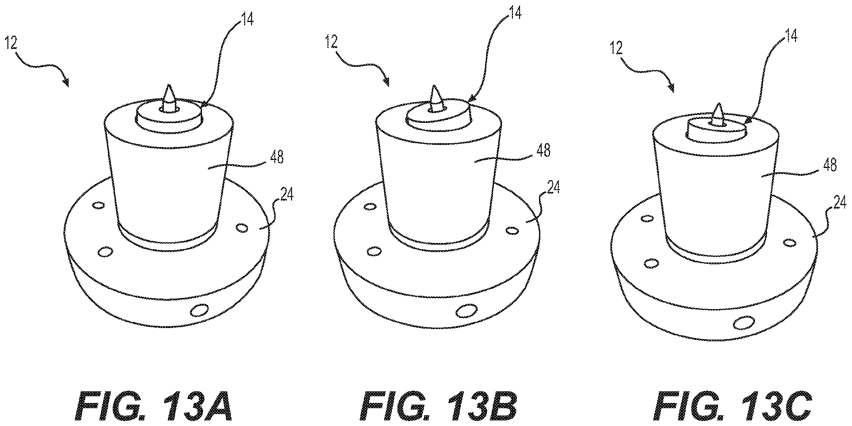

FIGS. 13A-13C are front perspective views of the base and base electrode of the example spot welding assembly, illustrating the base electrode being pivoted into different positions;

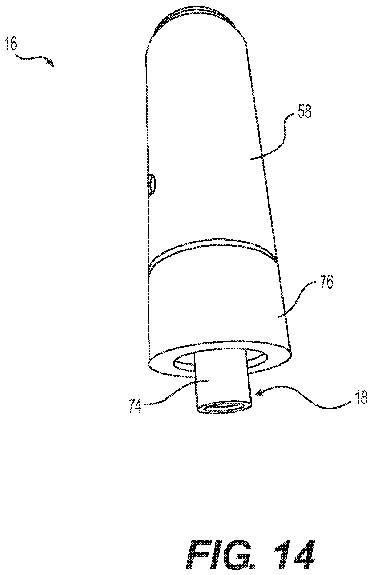

FIG. 14 is a front perspective view of the gun electrode of the example spot welding assembly in a centered position;

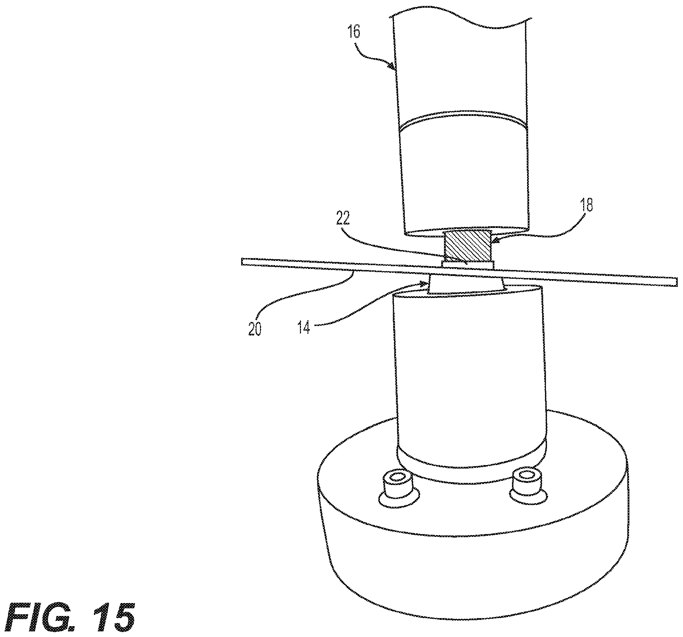

FIG. 15 is a front perspective view of the example spot welding assembly, illustrating the base and gun electrodes securing first and second work pieces in pivoted positions;
FIGS. 16A-16C are partial front schematic views of the gun electrode of the example spot welding assembly, illustrating the gun electrode being pivoted in various positions;
FIGS. 17A-17C are partial front schematic views of the base electrode of the example spot welding assembly, illustrating the base electrode being pivoted in various positions; and

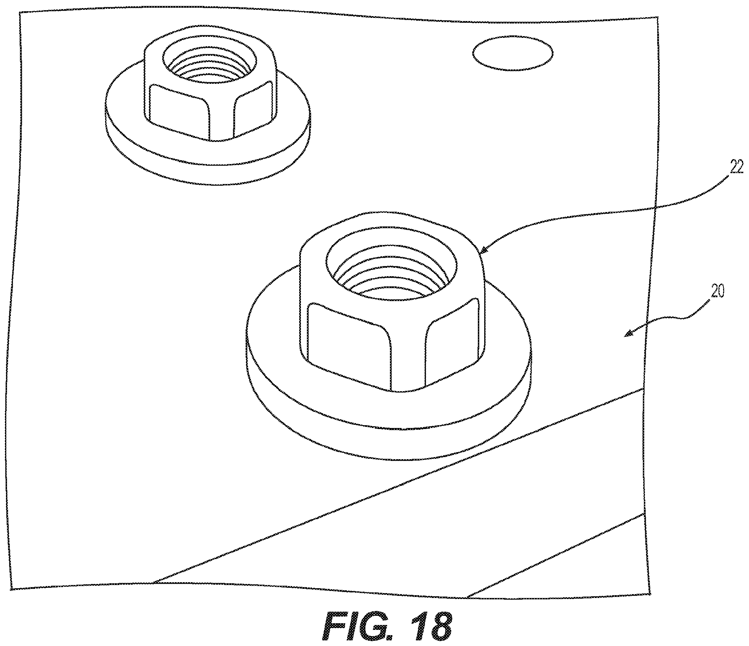

FIG. 18 is a top perspective view of example first and second work pieces for being located and welded by the example spot welding assembly.

### DESCRIPTION OF THE ENABLING EMBODIMENTS

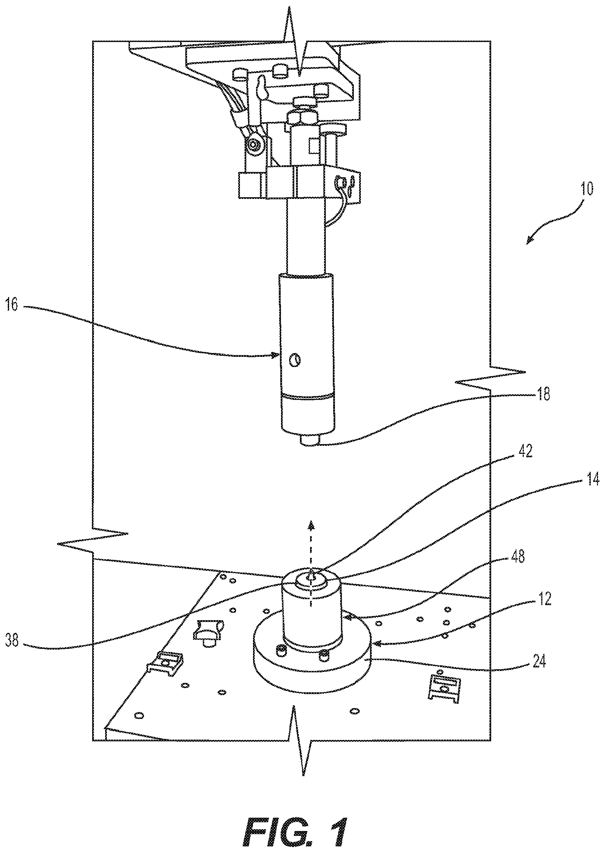

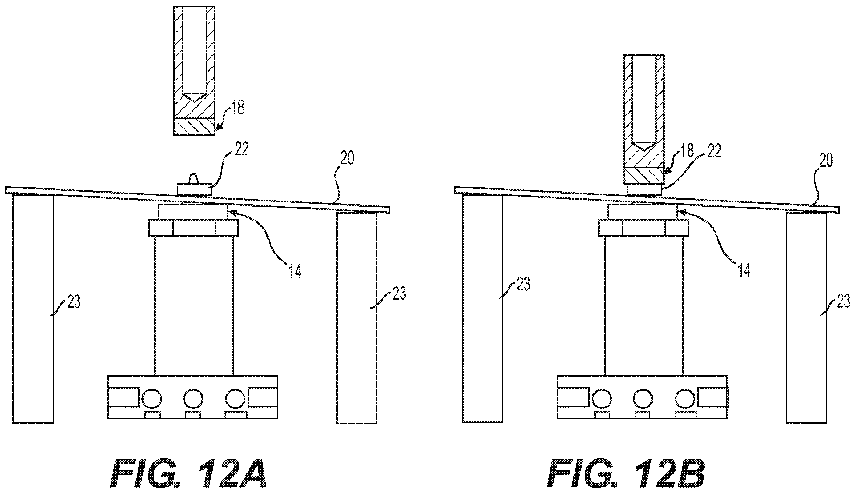

Referring to the Figures, wherein like numerals indicate correspond parts throughout the several views, a spot welding assembly 10 is generally shown. With reference to FIG. 1, the spot welding assembly 10 generally has a base 12 for supporting a base electrode 14, and a welding gun 16 for supporting a gun electrode 18. As shown in FIGS. 12A-12B, a first work piece 20 and a second work piece 22 are positioned between the base and gun electrodes 14, 18. The first work piece 20 is supported by tooling 23. With reference back to FIG. 1, the welding gun 16 is moveable toward and away from the base 12 in order to make the first and second work pieces 20, 22 engage one another, after which which a current is applied through the base and gun electrodes 14, 18 and the first and second work pieces 20, 22 in order to melt at least one of the first and/or second work pieces 20, 22 to form a weld therebetween. According to the example embodiment, the first work piece 20 is a flat plate and the second work piece 22 is a nut, but other types of work pieces may be utilized. As presented in the example embodiment, the subject spot welding assembly 10 may specifically be a projection welding assembly, wherein at least one of the work pieces 20, 22 has one or more projections for concentrating the current from the base and gun electrodes 14, 18 in order to target the weld to specific areas.

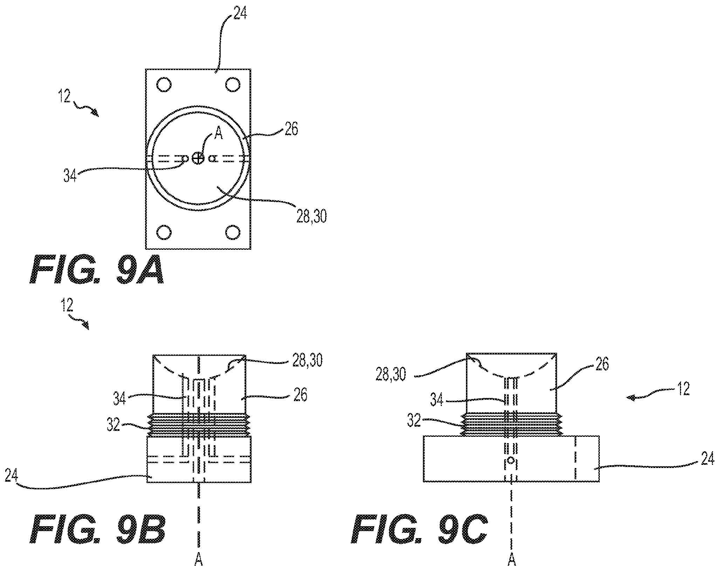

As shown in FIGS. 1 and 9A-9C, the base 12 has a bottom portion 24 that is configured to be located on a die. The bottom portion 24 may have various shapes, such as a cylindrical shape (e.g., FIGS. 1-2C) or a cuboid shaped (e.g., FIGS. 9A-9C). As best shown in FIGS. 9A-9C, the base 12 further has a generally cylindrical-shaped projection portion 26 that extends upwardly from the bottom portion 24 along an axis A and terminates at a top surface 28. The top surface 28 defines a first hemispherical portion 30 that concaves axially downwardly. The projection portion 26 defines a plurality of first threads 32 adjacent to the bottom portion 24. A plurality of first wire channels 34 extend through the projection portion 26 to the top surface 28 for receiving one or more wires for transmitting a current to the base electrode 14. The first wire channels 34 are spaced apart and positioned so that at least one of the first wire channels 34 contacts the convex second hemispherical portion 36 of the base electrode 14 with the base electrode 14 being in any position throughout its range of motion.

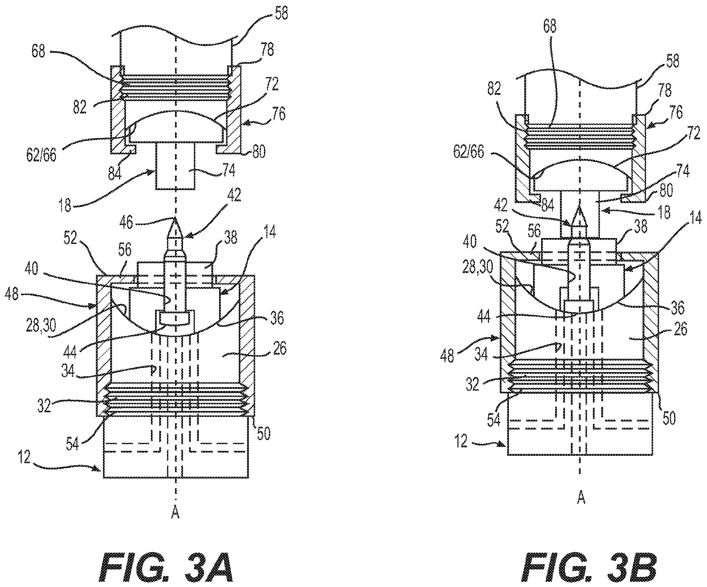

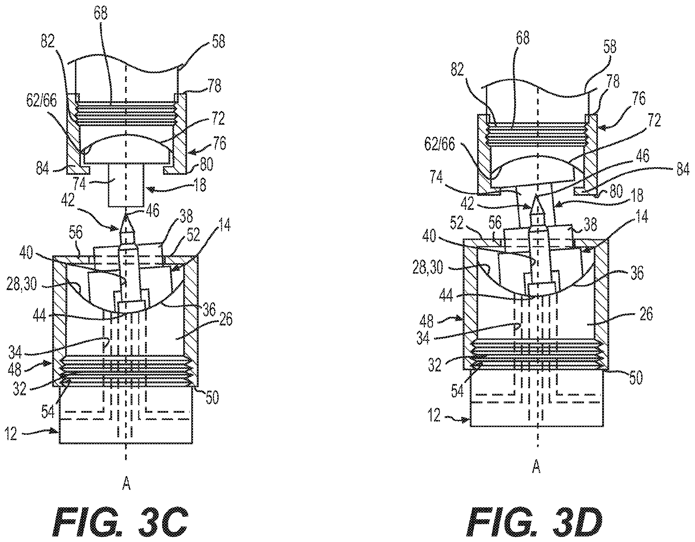

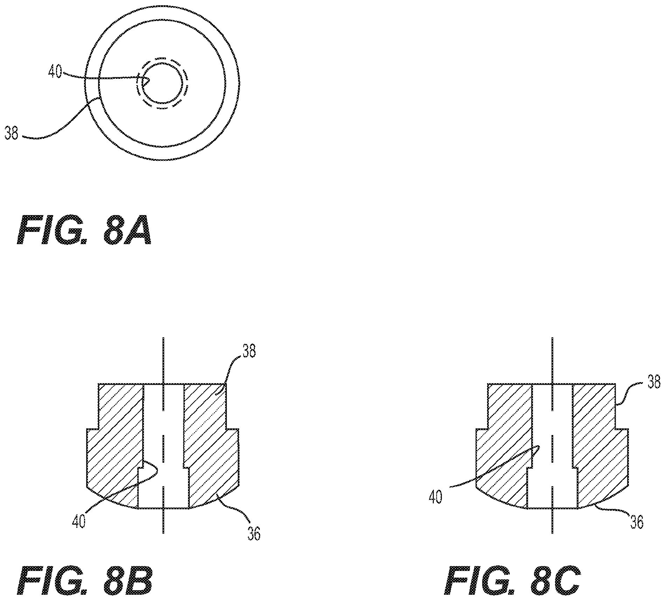

As illustrated in FIGS. 3A-3D and 8A-8C, the base electrode 14 is positioned against the first hemispherical portion 30 of the base 12. According to the example embodiment, the base electrode is made of a class 2 copper material, but other highly conductive materials could be utilized. The base electrode 14 has a convex second hemispherical portion 36 that nests with the first hemispherical portion 30 such that the second hemispherical portion 36 is rotatable 360 degrees and pivotable 360 degrees relative to the first hemispherical portion 30. The base electrode 14 further has a cylindrical projection 38 that extends upwardly from the second hemispherical portion 36 to a flat surface for supporting the first work piece 20. The base electrode 14 further defines a passage 40 that extends axially therethrough.

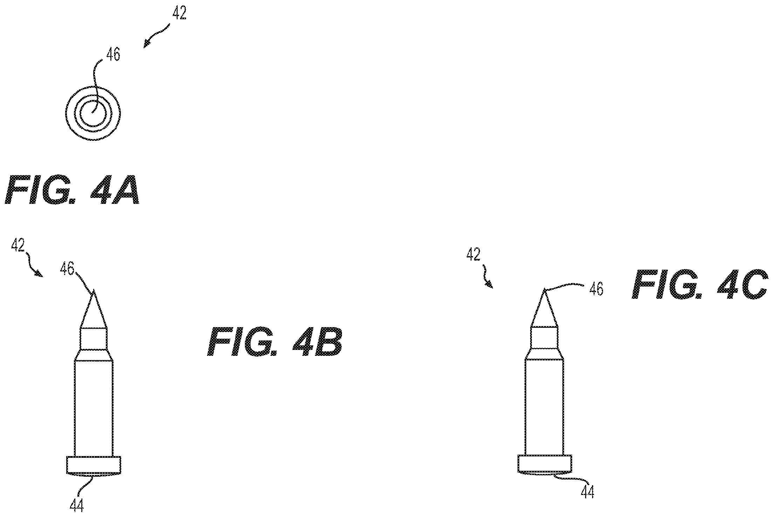

As illustrated in FIGS. 3A-3D and FIGS. 4A-4C, a weld pin 42 is received by the passage 40 of the base electrode 14. According to the example embodiment, the weld pin 42 is made of a non-magnetic stainless steel; however, other non-magnetic materials could be utilized. The weld pin 42 extends axially from a bulging end 44 to a tip 46 that tapers to a point axially outside of the passage 40. The bulging end 44 of the weld pin 42 engages and is pivotable along the first hemispherical portion 30 with the second hemispherical portion 36 of the base electrode 14. The weld pin 42 is configured to assist in aligning the second work piece 22 relative to the first work piece 20 by being received by the second work piece 22 and a tubular segment 46 of the gun electrode 18 (discussed in further detail below). The pointed tip 46 of the weld pin 42 assists in guiding the weld pin 42 into the second work piece 22 and tubular segment 46. Alternatively or additionally, the weld pin 42 may be configured to contact the first work piece 20. For example, the weld pin 42 may be located into a channel of the first work piece 20 to assist in locating the first work piece 20.

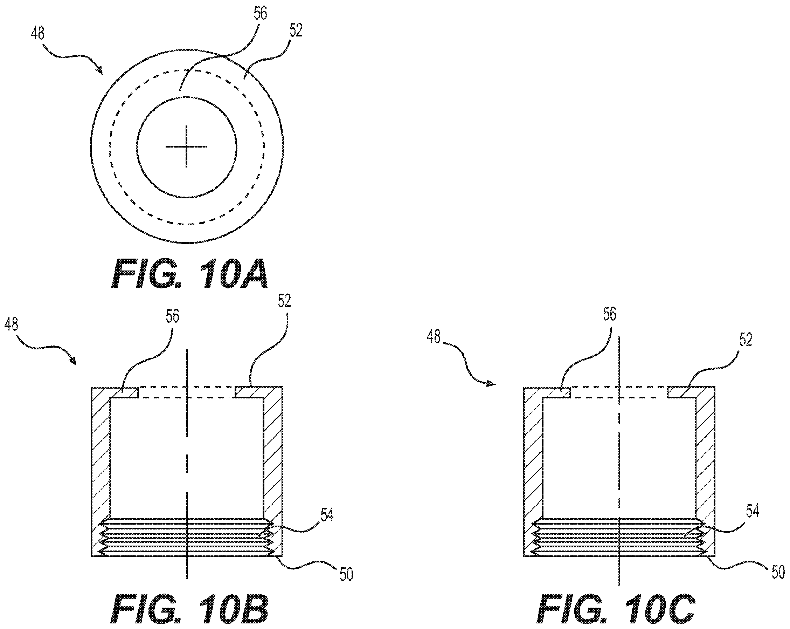

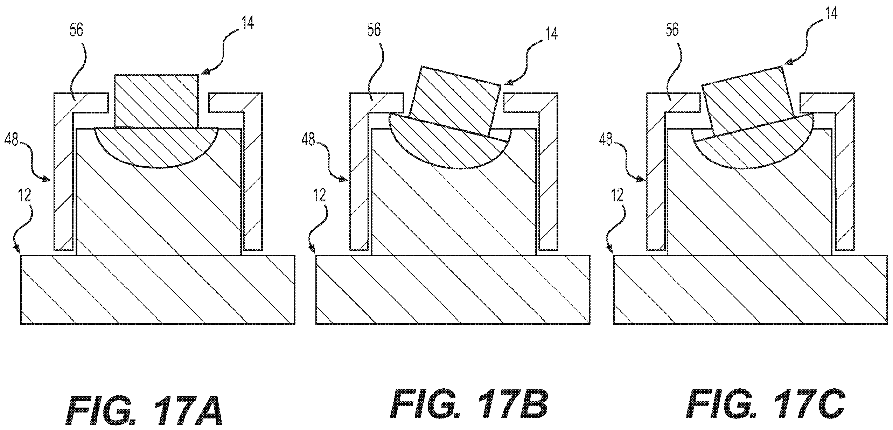

As illustrated in FIGS. 3A-3D and FIGS. 10A-10C, a retaining collar 48 that generally has a tube shape receives the projection portion 26 of the base 12. According to the example embodiment, the retaining collar 48 is made of a non-magnetic stainless steel material; however, other materials could be utilized. The retaining collar 48 extends axially between a bottom end 50 and a top end 52. A plurality of second threads 54 are defined adjacent to the bottom end 50. The second threads 54 are arranged to be threaded with the first threads 32 of the base 12 for securing the retaining collar 48 to the base 12. A first flange 56 extends radially inwardly from the top end 52. The first flange 56 terminates radially adjacent to, and in axial alignment with the projection 38 of the base electrode 14. The first flange 56 limits the pivoting movement of the base electrode 14 relative to the first hemispherical portion 30 of the base 12. More particularly, as generally shown in FIGS. 17A-17C, pivoting is limited to approximately 15 degrees in every direction according to the example embodiment, however, the first flange 56 could be sized to limit the pivoting to other angles. In addition to limiting pivoting movement of the base electrode 14, the retaining collar 48 prevents debris from entering the region of the first and second hemispherical portions 30, 36 in order to provide prolonged use of the welding assembly 10.

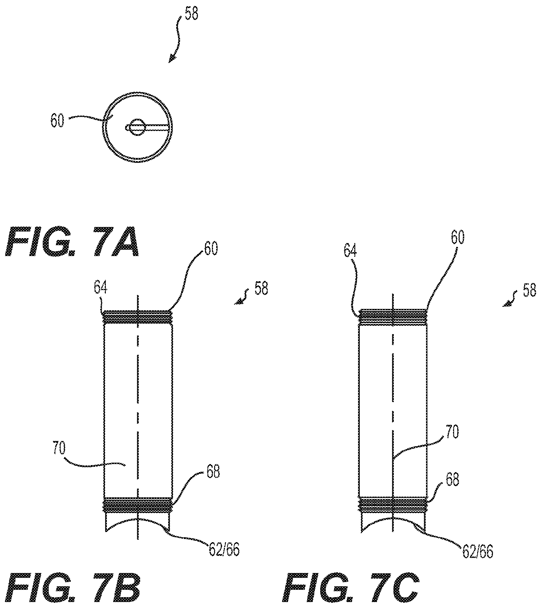

As best shown in FIGS. 7A-7C, an upper adapter 58 is coupled with the welding gun 16. According to the example embodiment, the upper adapter 58 is made of a class 2 copper material, however, other highly conductive materials could be utilized. The upper adapter 58 extends axially between a proximal end 60 and a distal end 62, with a plurality of third threads 64 defined adjacent to the proximal end 60 for threadedly fixing the upper adapter 58 to the welding gun 16. The distal end 62 of the upper adapter 58 defines a third hemispherical portion 66 that concaves into the distal end 62. The upper adapter 58 further defines fourth threads 68 adjacent to the distal end 62. A plurality of second wire channels 70 extend generally axially through the upper adapter 58 and terminate at the distal end 62 for receiving wires for transmitting a current to the gun electrode 18. The second wire channels 70 are spaced apart and positioned so that at least one of the second wire channels 70 contacts the convex fourth hemispherical portion 72 of the gun electrode 18 with the gun electrode 18 being in any position throughout its range of motion.

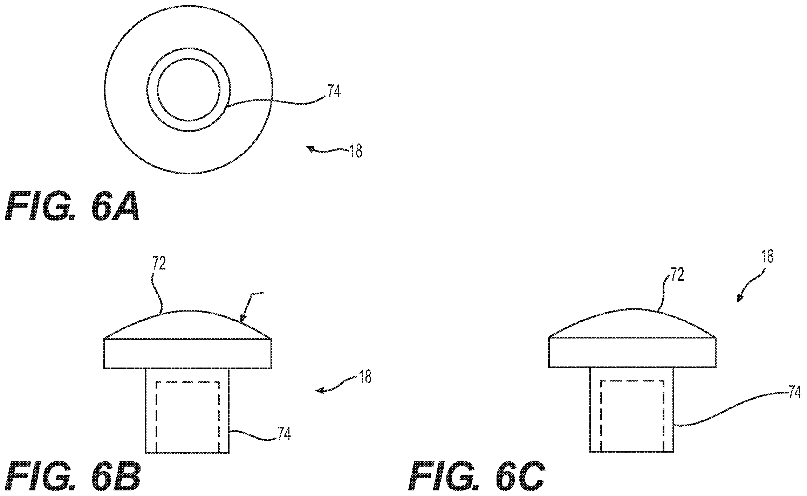

As best shown in FIGS. 3A-3D and 6A-6C, the gun electrode 18 is located against the upper adapter 58. According to the example embodiment, the gun electrode 18 is made of a class 2 copper material, however, other highly conductive materials may be utilized. The gun electrode 18 has a convex fourth hemispherical portion 72 that nests with the third hemispherical portion 66 such that the convex fourth hemispherical portion 72 is rotatable 360 degrees and pivotable 360 degrees relative to the third hemispherical portion 66. The gun electrode 18 further includes a tubular segment 74 that extends axially from the fourth hemispherical portion 72 and terminates at a flat end for receiving and locating the second work piece 22 and the weld pin 42.

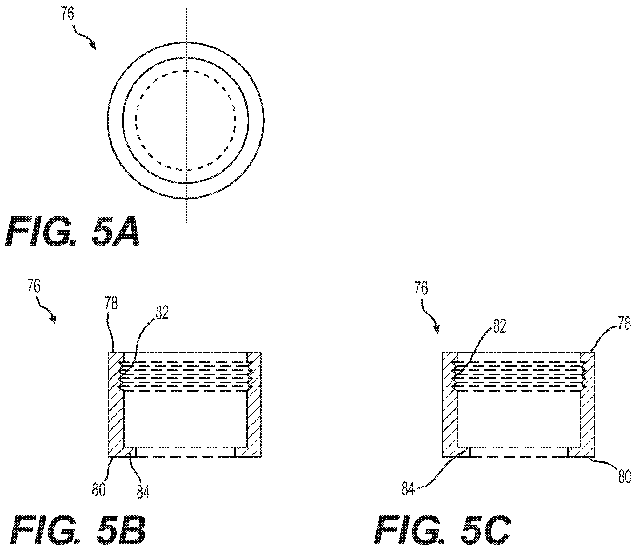

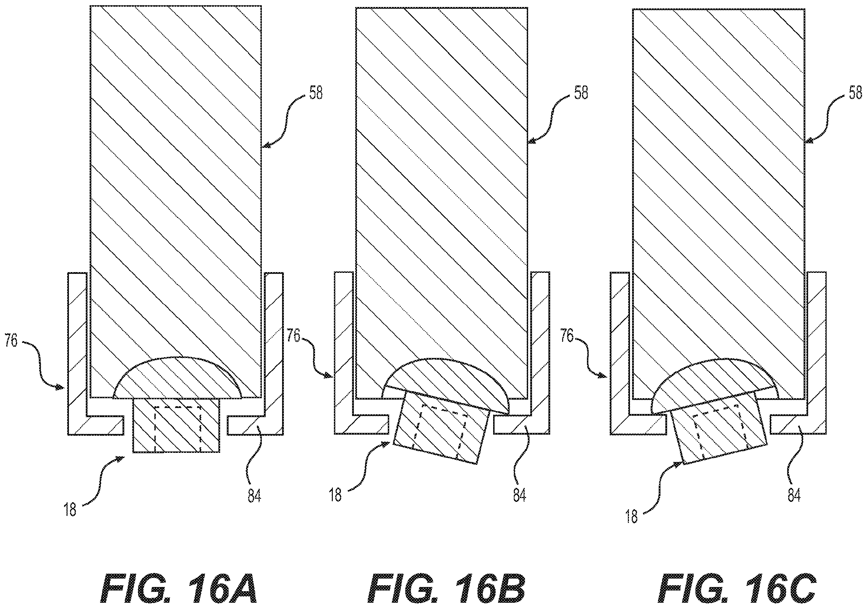

As best shown in FIGS. 3A-3D and 5A-5C, an upper collar 76 that generally has a cylindrical shape is coupled with the upper adapter 58. According to the example embodiment, the upper collar 76 is made of a non-magnetic stainless steel; however, other non-magnetic materials may be utilized. The upper collar 76 extends axially between a fixed end and 78 a guiding end 80. Fifth threads 82 are defined adjacent to the fixed end 78 for being threaded with the fourth threads 68 of the upper adapter 58. The upper collar 76 further includes a second flange 84 that extends radially inwardly from the guiding end 80 for limiting the pivoting movement of the gun electrode 18 relative to the upper adapter 58. More particularly, as generally shown in FIGS. 16A-16C, pivoting is limited to approximately 15 degrees in every direction in the example embodiment, however, the second flange 84 could be sized to limit the pivoting to other angles. In addition to limiting pivoting movement of the gun electrode 18, the upper collar 76 prevents debris from entering the region of the third and fourth hemispherical portions 66, 72 in order to provide prolonged use of the welding assembly 10.

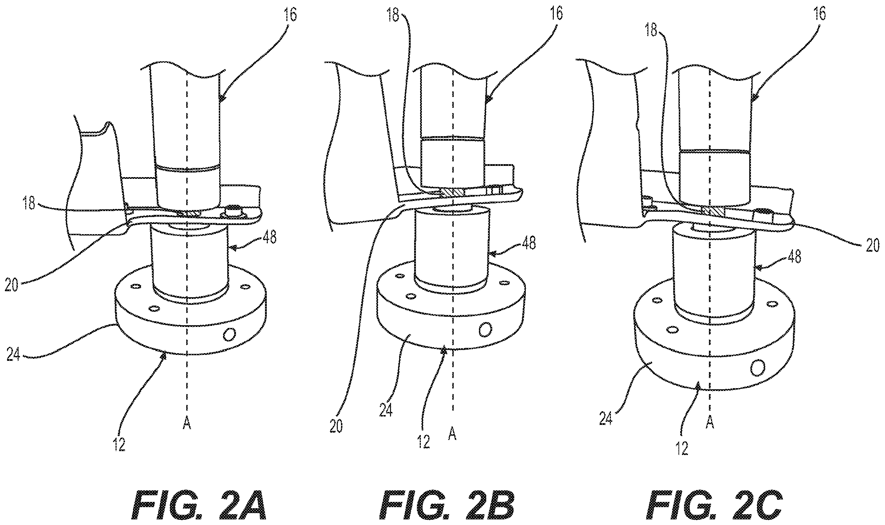

During use of the spot welding assembly 10, the pivoting movement and rotation of the base and gun electrodes 14, 18 allows the base and gun electrodes 14, 18 to be oriented flat against the first and second work pieces 20, 22 to provide a large contact area against the first and second work pieces 20, 22, even when the first and second work pieces 20, 22 do not lie parallel to an original plane that is defined between the base and gun electrodes 14, 18 when they are in an un-pivoted / centered position, such as when they are improperly placed or irregularly shaped. The large contact area provides adequate electrical and thermal conductivity during welding, thus ensuring a successful weld even in non-ideal conditions. For example, FIG. 2A shows the base and gun electrodes 14, 18 in a centered position with the first work piece 20 positioned generally along the original plane, FIG. 2B shows the base and gun electrodes 14, 18 in a tilted left position while maintaining flat contact against the first and second work pieces 20, 22, and FIG. 2C shows the base and gun electrodes 14, 18 in a tilted right position while maintaining flat contact against the first and second work pieces 20, 22.

As illustrated in FIG. 1, during operation, the welding gun 16 starts in a raised position, and the base and gun electrodes 14, 18 are in their centered, un-pivoted state. The first work piece 20 (a plate in the example embodiment) is positioned on the base electrode 14 via either automatic or manual load. At this point, the base electrode 14 may be rotated and pivoted to compensate for any angular deflection caused by the first work piece 20 not being located along the original plane to ensure proper contact of the base electrode 14 against the first work piece 20. Specifically, the base electrode 14 may be rotated and pivoted to match an angle of the first work piece 20. Once the first work piece 20 is located, the second work piece 22 (which is a projection fastener in the case of the example embodiment), is placed over the weld pin 42. The gun electrode 18 is then lowered toward the base electrode 14 with the welding gun 16. Upon contact of the second work piece 22 against the first work piece 20, the gun electrode 18 automatically rotates and pivots to match an angle of the base electrode 14 to provide full contact between the first and second work pieces 20, 22 (illustrated in FIG. 3D). An electrical current is then supplied to the base and gun electrodes 14, 18, melting the second work piece 22 to the first work piece 20, to create a weld therebetween. It should be appreciated that one of the first and second work pieces 20, 22 may present one or more projections that engage the other work piece for concentrating the current and weld.

Unless otherwise defined, the term "hemispherical," as used in the present application, includes any surface extending along a portion of a sphere. The term "hemispherical" is not limited to exactly one-half of a sphere shape.

The foregoing description is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the invention, and all such modifications are intended to be included within the scope of the invention as defined in the appended claims.

## Claims

1. A spot welding assembly (10) comprising: a base (12); a base electrode (14) coupled with the base (12) for supporting a first work piece (20); a welding gun (16) moveable toward and away from the base (12); a gun electrode (18) coupled with the welding gun (16) for supporting a second work piece (22) and for locating the second work piece (22) against the first work piece (20) upon movement of the welding gun (16) toward the base (12) to allow the first and second work pieces (20, 22) to be welded to one another,
the spot welding assembly (10) being **characterised in that**:
**the base** electrode (14) is pivotable relative to the base (12) and the gun electrode (18) is pivotable relative to the welding gun (16).

2. The spot welding assembly (10) of Claim 1, wherein the base electrode (14) is pivotable 360 degrees relative to the base (12) and the gun electrode (18) is pivotable 360-degrees relative to the welding gun (16).

3. The spot welding assembly (10) of any of Claims 1 or 2, wherein both of the base (12) and the welding gun (16) each includes a concave hemispherical portion (30) configured to receive a convex hemispherical portion (36) of a corresponding one of the gun electrode (18) or the base electrode (14).

4. A spot welding assembly (10) comprising: a base (12); a base electrode (14) coupled with the base (12) for supporting a first work piece (20); a welding gun (16) moveable toward and away from the base (12); a gun electrode (18) coupled with the welding gun (16) for supporting a second work piece (22) and for locating the second work piece (22) against the first work piece (20) upon movement of the welding gun (16) toward the base (12) to allow the first and second work pieces (20, 22) to be welded to one another;
the spot welding assembly (10) being **characterised by**:
at least one of:
the base electrode (14) being pivotable relative to the base (12), or the gun electrode (18) being pivotable relative to the welding gun (16),
and, in that:
at least one of the base (12) or the welding gun (16) includes a collar (48) having a flange (56) extending radially inwardly for limiting a pivoting movement of a corresponding one of the electrodes (14, 18).

5. The spot welding assembly (10) of Claim 4, wherein each of the base (12) and the welding gun (16) includes a collar (48) having a flange (56) extending radially inwardly for limiting a pivoting movement of a corresponding one of the electrodes (14, 18).

6. The spot welding assembly(10) of Claim 4, wherein the collar (48) includes threads for securing the collar onto an upper adapter (58) of the welding gun (16) or onto a cylindrical-shaped projection of the base (12).

7. The spot welding assembly (10) of Claim 4, wherein the flange (56) is configured to limit the pivoting movement of the corresponding one of the electrodes (14, 18) to about 15 degrees.

8. A spot welding assembly (10) comprising: a base (12); a base electrode (14) coupled with the base (12) for supporting a first work piece (20); a welding gun (16) moveable toward and away from the base (12); a gun electrode (18) coupled with the welding gun (16) for supporting a second work piece (22) and for locating the second work piece (22) against the first work piece (20) upon movement of the welding gun (16) toward the base (12) to allow the first and second work pieces (20, 22) to be welded to one another;
the spot welding assembly (10) being **characterised by**:
at least one of:
the base electrode (14) being pivotable relative to the base (12), or the gun electrode (18) being pivotable relative to the welding gun (16),
and, in that:
at least one of the electrodes (14, 18) defines a passage (40) extending axially therethrough for receiving a weld pin (42) therethrough, the weld pin (42) being configured to align the second work piece (22) with the first work piece (20).

9. The spot welding assembly (10) of Claim 8, wherein at least one of the base (12) or the welding gun (16) includes a concave hemispherical portion (30) configured to receive a convex hemispherical portion (36) of a corresponding one of the gun electrode (18) or the base electrode (14); and wherein the weld pin (42) extends axially from a bulging end (44) to a tip (46) that tapers to a point axially outside of the passage (40), the bulging end (44) of the weld pin (42) being configured to engage and be pivotable along the concave hemispherical portion (30) of the at least one of the base (12) or the welding gun (16).

10. The spot welding assembly (10) of Claim 8, wherein another one of the electrodes (14, 18) from the at least one of the electrodes (14, 18) defining the passage (40) for receiving the weld pin (42) therethrough further includes a tubular segment (46) configured to receive the weld pin (42) upon movement of the welding gun (16) toward the base (12).

11. A spot welding assembly (10) comprising: a base (12); a base electrode (14) coupled with the base (12) for supporting a first work piece (20); a welding gun (16) moveable toward and away from the base (12); a gun electrode (18) coupled with the welding gun (16) for supporting a second work piece (22) and for locating the second work piece (22) against the first work piece (20) upon movement of the welding gun (16) toward the base (12) to allow the first and second work pieces (20, 22) to be welded to one another;
the spot welding assembly (10) being **characterised by**:
the base electrode (14) being pivotable relative to the base (12), wherein the base electrode (14) is pivotable throughout a range of motion; wherein the base (12) includes a projection portion (26) defining a plurality of wire channels (34) extending therethrough for receiving wires for transmitting a current to the base electrode (14); and wherein the wire channels (34) are spaced apart and positioned so that at least one of the wire channels (34) contacts the base electrode (14) with the base electrode (14) being in any position throughout its range of motion.

12. A spot welding assembly (10) comprising: a base (12); a base electrode (14) coupled with the base (12) for supporting a first work piece (20); a welding gun (16) moveable toward and away from the base (12); a gun electrode (18) coupled with the welding gun (16) for supporting a second work piece (22) and for locating the second work piece (22) against the first work piece (20) upon movement of the welding gun (16) toward the base (12) to allow the first and second work pieces (20, 22) to be welded to one another;
the spot welding assembly (10) being **characterised by**:
the gun electrode (18) being pivotable relative to the welding gun (16), wherein the gun electrode (18) is pivotable throughout a range of motion; wherein the welding gun (16) includes an upper adapter (58) defining a plurality of wire channels (70) extending therethrough for receiving wires for transmitting a current to the gun electrode (18); and wherein the wire channels (70) are spaced apart and positioned so that at least one of the wire channels (70) contacts the gun electrode (18) with the gun electrode (18) being in any position throughout its range of motion.

## Patentansprüche

1. Eine Punktschweißvorrichtung (10), aufweisend: eine Basis (12); eine Basiselektrode (14), die mit der Basis (12) verbunden ist, um ein erstes Werkstück (20) zu stützen; eine Schweißpistole (16), die auf die Basis (12) zu und von dieser weg bewegt werden kann; eine Pistolenelektrode (18), die mit der Schweißpistole (16) verbunden ist, um ein zweites Werkstück (22) zu stützen und um das zweite Werkstück (22) bei Bewegung der Schweißpistole (16) zu der Basis (12) gegen das erste Werkstück (20) zu lokalisieren, zu gestatten das das erste und zweite Werkstück (20, 22) miteinander verschweißen werden, wobei die Punktschweißvorrichtung (10) **dadurch gekennzeichnet ist, dass**: die Basiselektrode (14) relativ zur Basis (12) schwenkbar ist und die Pistolenelektrode (18) relativ zur Schweißpistole (16) schwenkbar ist.

2. Die Punktschweißvorrichtung (10) nach Anspruch 1, wobei die Basiselektrode (14) um 360 Grad relativ zur Basis (12) schwenkbar ist und die Zangenelektrode (18) um 360 Grad relativ zur Schweißpistole (16) schwenkbar ist.

3. Die Punktschweißvorrichtung (10) nach einem der Ansprüche 1 oder 2, wobei sowohl die Basis (12) als auch die Schweißpistole (16) jeweils einen konkaven halbkugelförmigen Abschnitt (30) aufweisen, der so konfiguriert ist, dass er einen konvexen halbkugelförmigen Abschnitt (36) der Pistolenelektrode (18) oder der Basiselektrode (14) aufnimmt.

4. Eine Punktschweißvorrichtung (10) mit: einer Basis (12); einer mit der Basis (12) verbundenen Basiselektrode (14) zum Halten eines ersten Werkstücks (20); einer Schweißpistole (16), die auf die Basis (12) zu und von dieser weg bewegt werden kann; einer mit der Schweißpistole (16) verbundenen Pistolenelektrode (18) zum Halten eines zweiten Werkstücks (22) und zum Anordnen des zweiten Werkstücks (22) an dem ersten Werkstück (20) bei Bewegung der Schweißpistole (16) in Richtung der Basis (12), um das erste und zweite Werkstück (20, 22) miteinander verschweißen zu können, wobei die Punktschweißanordnung (10) **dadurch gekennzeichnet ist, dass** mindestens eines der folgenden Merkmale gegeben ist: die Basiselektrode (14) ist relativ zur Basis (12) schwenkbar, oder die Pistolenelektrode (18) ist relativ zur Schweißpistole (16) schwenkbar, und dadurch, dass mindestens eines von der Basis (12) oder der Schweißpistole (16) einen Kragen (48) mit einem sich radial nach innen erstreckenden Flansch (56) umfasst, um eine Schwenkbewegung einer entsprechenden der Elektroden (14, 18) zu begrenzen.

5. Die Punktschweißvorrichtung (10) nach Anspruch 4, wobei sowohl die Basis (12) als auch die Schweißpistole (16) einen Kragen (48) mit einem sich radial nach innen erstreckenden Flansch (56) zur Begrenzung einer Schwenkbewegung einer entsprechenden der Elektroden (14, 18) umfasst.

6. Die Punktschweißvorrichtung (10) nach Anspruch 4, wobei der Kragen (48) Gewindegänge zum Befestigen des Kragens an einem oberen Adapter (58) der Schweißpistole (16) oder an einem zylindrisch geformten Vorsprung der Basis (12) umfasst.

7. Die Punktschweißvorrichtung (10) nach Anspruch 4, wobei der Flansch (56) so konfiguriert ist, dass er die Schwenkbewegung der entsprechenden Elektrode (14, 18) auf etwa 15 Grad begrenzt.

8. Eine Punktschweißvorrichtung (10), aufweisend: eine Basis (12); eine Basiselektrode (14), die mit der Basis (12) verbunden ist, um ein erstes Werkstück (20) zu tragen; eine Schweißpistole (16), die auf die Basis (12) zu und von dieser weg bewegt werden kann; eine Pistolenelektrode (18), die mit der Schweißpistole (16) verbunden ist, um ein zweites Werkstück (22) zu tragen und das zweite Werkstück (22) bei Bewegung der Schweißpistole (16) auf die Basis (12) zu gegen das erste Werkstück (20) bei Bewegung der Schweißpistole (16) in Richtung der Basis (12), um das erste und zweite Werkstück (20, 22) miteinander verschweißen zu können, wobei die Punktschweißanordnung (10) **dadurch gekennzeichnet ist, dass** mindestens eines der folgenden Merkmale gegeben ist: die Basiselektrode (14) ist relativ zur Basis (12) schwenkbar oder die Pistolenelektrode (18) ist relativ zur Schweißpistole (16) schwenkbar, und dadurch, dass mindestens eine der Elektroden (14, 18) einen Durchgang (40) definiert, der sich axial durch diese hindurch erstreckt, um einen Schweißstift (42) durch diesen hindurch aufzunehmen, wobei der Schweißstift (42) so konfiguriert ist, dass er das zweite Werkstück (22) mit dem ersten Werkstück (20) ausrichtet.

9. Die Punktschweißvorrichtung (10) nach Anspruch 8, wobei mindestens eines von der Basis (12) oder der Schweißpistole (16) einen konkaven halbkugelförmigen Abschnitt (30) umfasst, der so konfiguriert ist, dass er einen konvexen halbkugelförmigen Abschnitt (36) einer entsprechenden Elektrode der Schweißpistole (18) oder der Basiselektrode (14) aufnimmt; und wobei der Schweißstift (42) sich axial von einem gewölbten Ende (44) zu einer Spitze (46) erstreckt, die sich axial außerhalb des Durchgangs (40) zu einer Spitze verjüngt, wobei das gewölbte Ende (44) des Schweißstifts (42) so konfiguriert ist, dass es entlang des konkaven halbkugelförmigen Abschnitts (30) der Basis (12) oder der Schweißpistole (16) oder beider in Eingriff kommt und entlang dieser schwenkbar ist.

10. Die Punktschweißvorrichtung (10) nach Anspruch 8, wobei eine andere der Elektroden (14, 18) von der mindestens einen der Elektroden (14, 18), die den Durchgang (40) zur Aufnahme des Schweißstifts (42) dort hindurch definiert, ferner ein röhrenförmiges Segment (46) umfasst, das so konfiguriert ist, dass es den Schweißstift (42) bei Bewegung der Schweißpistole (16) in Richtung der Basis (12) aufnimmt.

11. Eine Punktschweißvorrichtung (10), aufweisend: eine Basis (12); eine Basiselektrode (14), die mit der Basis (12) gekoppelt ist, um ein erstes Werkstück (20) zu stützen; eine Schweißpistole (16), die zur Basis (12) hin und von dieser weg bewegt werden kann; eine Pistolenelektrode (18), die mit der Schweißpistole (16) gekoppelt ist, um ein zweites Werkstück (22) zu stützen und das zweite Werkstück (22) gegen das erste Werkstück (20) bei Bewegung der Schweißpistole (16) in Richtung der Basis (12), um das erste und zweite Werkstück (20, 22) miteinander verschweißen zu können, wobei die Punktschweißanordnung (10) **dadurch gekennzeichnet ist, dass** die Basiselektrode (14) relativ zur Basis (12) schwenkbar ist, wobei die Basiselektrode (14) über einen Bewegungsbereich schwenkbar ist; wobei die Basis (12) einen Vorsprung (26) umfasst, der eine Vielzahl von Drahtkanälen (34) definiert, die sich durch diesen hindurch erstrecken, um Drähte zur Übertragung eines Stroms zur Basiselektrode (14) aufzunehmen; und wobei die Drahtkanäle (34) voneinander beabstandet und so positioniert sind, dass mindestens einer der Drahtkanäle (34) die Basiselektrode (14) berührt, wobei sich die Basiselektrode (14) in jeder Position über ihren gesamten Bewegungsbereich befindet.

12. Eine Punktschweißvorrichtung (10), aufweisend: eine Basis (12); eine Basiselektrode (14), die mit der Basis (12) gekoppelt ist, um ein erstes Werkstück (20) zu stützen; eine Schweißpistole (16), die in Richtung der Basis (12) und von dieser weg bewegt werden kann; eine Pistolenelektrode (18), die mit der Schweißpistole (16) gekoppelt ist, um ein zweites Werkstück (22) zu stützen und das zweite Werkstück (22) gegen das erste Werkstück (20) bei Bewegung der Schweißpistole (16) in Richtung der Basis (12), um das erste und das zweite Werkstück (20, 22) miteinander verschweißen zu können, wobei die Punktschweißanordnung (10) **dadurch gekennzeichnet ist, dass** die Pistolenelektrode (18) relativ zur Schweißpistole (16) schwenkbar ist, wobei die Pistolenelektrode (18) über einen Bewegungsbereich schwenkbar ist; wobei die Schweißpistole (1 6) einen oberen Adapter (58) umfasst, der eine Vielzahl von Drahtkanälen (70) definiert, die sich durch diesen hindurch erstrecken, um Drähte zur Übertragung eines Stroms zur Pistolenelektrode (18) aufzunehmen; und wobei die Drahtkanäle (70) voneinander beabstandet und so positioniert sind, dass mindestens einer der Drahtkanäle (70) die Pistolenelektrode (18) berührt, wobei sich die Pistolenelektrode (18) in einer beliebigen Position über ihren gesamten Bewegungsbereich befindet.

## Revendications

1. Ensemble de soudage par points (10) comprenant : une base (12) ; une électrode de base (14) couplée à la base (12) pour supporter une première pièce à usiner (20) ; un pistolet de soudage (16) pouvant se rapprocher et s'éloigner de la base (12) ; une électrode de pistolet (18) couplée au pistolet de soudage (16) pour supporter une seconde pièce à usiner (22) et pour positionner la seconde pièce à usiner (22) contre la première pièce à usiner (20) lors du mouvement du pistolet de soudage (16) vers la base (12) pour permettre aux première et seconde pièces à usiner (20, 22) d'être soudées l'une à l'autre,
l'ensemble de soudage par points (10) étant **caractérisé en ce que** :
l'électrode de base (14) peut pivoter par rapport à la base (12) et l'électrode de pistolet (18) peut pivoter par rapport au pistolet de soudage (16).

2. Ensemble de soudage par points (10) selon la revendication 1, dans lequel l'électrode de base (14) peut pivoter de 360 degrés par rapport à la base (12) et l'électrode de pistolet (18) peut pivoter de 360 degrés par rapport au pistolet de soudage (16).

3. Ensemble de soudage par points (10) selon l'une quelconque des revendications 1 ou 2, dans lequel à la fois la base (12) et le pistolet de soudage (16) comportent chacun une partie hémisphérique concave (30) configurée pour recevoir une partie hémisphérique convexe (36) de l'une correspondante parmi l'électrode de pistolet (18) ou l'électrode de base (14).

4. Ensemble de soudage par points (10) comprenant : une base (12) ; une électrode de base (14) couplée à la base (12) pour supporter une première pièce à usiner (20) ; un pistolet de soudage (16) pouvant se rapprocher et s'éloigner de la base (12) ; une électrode de pistolet (18) couplée au pistolet de soudage (16) pour supporter une seconde pièce à usiner (22) et pour positionner la seconde pièce à usiner (22) contre la première pièce à usiner (20) lors du déplacement du pistolet de soudage (16) vers la base (12) pour permettre aux première et seconde pièces à usiner (20, 22) d'être soudées l'une à l'autre ;
l'ensemble de soudage par points (10) étant **caractérisé par** :
au moins l'une parmi :
l'électrode de base (14) pouvant pivoter par rapport à la base (12), ou l'électrode de pistolet (18) pouvant pivoter par rapport au pistolet de soudage (16),
et, en ce que :
au moins l'un de la base (12) ou du pistolet de soudage (16) comporte un collier (48) ayant une bride (56) s'étendant radialement vers l'intérieur pour limiter un mouvement de pivotement d'une électrode correspondante des électrodes (14, 18).

5. Ensemble de soudage par points (10) selon la revendication 4, dans lequel chacun de la base (12) et du pistolet de soudage (16) comporte un collier (48) ayant une bride (56) s'étendant radialement vers l'intérieur pour limiter un mouvement de pivotement d'une électrode correspondante des électrodes (14, 18).

6. Ensemble de soudage par points (10) selon la revendication 4, dans lequel le collier (48) comporte des filetages pour fixer le collier sur un adaptateur supérieur (58) du pistolet de soudage (16) ou sur une projection de forme cylindrique de la base (12).

7. Ensemble de soudage par points (10) selon la revendication 4, dans lequel la bride (56) est configurée pour limiter le mouvement de pivotement de l'électrode correspondante des électrodes (14, 18) à environ 15 degrés.

8. Ensemble de soudage par points (10) comprenant : une base (12) ; une électrode de base (14) couplée à la base (12) pour supporter une première pièce à usiner (20) ; un pistolet de soudage (16) pouvant se rapprocher et s'éloigner de la base (12) ; une électrode de pistolet (18) couplée au pistolet de soudage (16) pour supporter une seconde pièce à usiner (22) et pour positionner la seconde pièce à usiner (22) contre la première pièce à usiner (20) lors du mouvement du pistolet de soudage (16) vers la base (12) pour permettre aux première et seconde pièces à usiner (20, 22) d'être soudées l'une à l'autre ;
l'ensemble de soudage par points (10) étant **caractérisé par** :
au moins l'une parmi :
l'électrode de base (14) pouvant pivoter par rapport à la base (12), ou l'électrode de pistolet (18) pouvant pivoter par rapport au pistolet de soudage (16),
et, en ce que :
au moins l'une des électrodes (14, 18) définit un passage (40) s'étendant axialement à travers celle-ci pour recevoir une broche de soudage (42) à travers celui-ci, la broche de soudage (42) étant configurée pour aligner la seconde pièce à usiner (22) avec la première pièce à usiner (20).

9. Ensemble de soudage par points (10) selon la revendication 8, dans lequel au moins l'un de la base (12) ou du pistolet de soudage (16) comporte une partie hémisphérique concave (30) configurée pour recevoir une partie hémisphérique convexe (36) de l'une correspondante de l'électrode de pistolet (18) ou de l'électrode de base (14) ; et dans lequel la broche de soudage (42) s'étend axialement depuis une extrémité bombée (44) jusqu'à une pointe (46) qui rétrécit jusqu'à un point axialement à l'extérieur du passage (40), l'extrémité bombée (44) de la broche de soudage (42) étant configurée pour venir en prise avec la partie hémisphérique concave (30) du au moins l'un de la base (12) ou du pistolet de soudage (16), et pouvoir pivoter le long de celle-ci.

10. Ensemble de soudage par points (10) selon la revendication 8, dans lequel une autre des électrodes (14, 18) de la au moins une des électrodes (14, 18) définissant le passage (40) pour recevoir la broche de soudage (42) à travers celui-ci comporte en outre un segment tubulaire (46) configuré pour recevoir la broche de soudage (42) lors du mouvement du pistolet de soudage (16) vers la base (12).

11. Ensemble de soudage par points (10) comprenant : une base (12) ; une électrode de base (14) couplée à la base (12) pour supporter une première pièce à usiner (20) ; un pistolet de soudage (16) pouvant se rapprocher et s'éloigner de la base (12) ; une électrode de pistolet (18) couplée au pistolet de soudage (16) pour supporter une seconde pièce à usiner (22) et pour positionner la seconde pièce à usiner (22) contre la première pièce à usiner (20) lors du déplacement du pistolet de soudage (16) vers la base (12) pour permettre aux première et seconde pièces à usiner (20, 22) d'être soudées l'une à l'autre ;
l'ensemble de soudage par points (10) étant **caractérisé par** :
l'électrode de base (14) pouvant pivoter par rapport à la base (12), dans lequel l'électrode de base (14) peut pivoter sur toute une plage de mouvement ; dans lequel la base (12) comporte une partie en saillie (26) définissant une pluralité de canaux de fil (34) s'étendant à travers celle-ci pour recevoir des fils pour transmettre un courant à l'électrode de base (14) ; et dans lequel les canaux de fil sont espacés et positionnés de telle sorte qu'au moins l'un des canaux de fil (34) entre en contact avec l'électrode de base (14), l'électrode de base (14) étant dans une quelconque position sur toute sa plage de mouvement.

12. Ensemble de soudage par points (10) comprenant : une base (12) ; une électrode de base (14) couplée à la base (12) pour supporter une première pièce à usiner (20) ; un pistolet de soudage (16) pouvant se rapprocher et s'éloigner de la base (12) ; une électrode de pistolet (18) couplée au pistolet de soudage (16) pour supporter une seconde pièce à usiner (22) et pour positionner la seconde pièce à usiner (22) contre la première pièce à usiner (20) lors du déplacement du pistolet de soudage (16) vers la base (12) pour permettre aux première et seconde pièces à usiner (20, 22) d'être soudées l'une à l'autre ;
l'ensemble de soudage par points (10) étant **caractérisé par** :
l'électrode de pistolet (18) pouvant pivoter par rapport au pistolet de soudage (16), dans lequel l'électrode de pistolet (18) peut pivoter sur toute une plage de mouvement ;
dans lequel le pistolet de soudage (16) comporte un adaptateur supérieur (58) définissant une pluralité de canaux de fil (70) s'étendant à travers celui-ci pour recevoir des fils pour transmettre un courant à l'électrode de pistolet (18) ; et dans lequel les canaux de fil (70) sont espacés et positionnés de telle sorte qu'au moins l'un des canaux de fil (70) entre en contact avec l'électrode de pistolet (18), l'électrode de pistolet (18) étant dans une quelconque position sur toute sa plage de mouvement.
